# EUROPÄISCHE PATENTSCHRIFT

(11) **EP 3 993 200 B1**
(45) Veröffentlichungstag und Bekanntmachung des Hinweises auf die Patenterteilung: **29.05.2024**
(21) Anmeldenummer: 21205852.3
(22) Anmeldetag: 02.11.2021
(51) Int. Cl.: H02G 3/12, H02G 3/08

(54) **INSTALLATIONSDOSE FÜR EINE HOHLWANDINSTALLATION**
INSTALLATION BOX FOR INSTALLATION IN CAVITY WALL
BOÎTE D'INSTALLATION POUR UNE INSTALLATION DE PAROI CREUSE

(30) Priorität: 03.11.2020 DE 202020106278 U
(43) Veröffentlichungstag der Anmeldung: 04.05.2022
(73) Patentinhaber: OBO Bettermann Hungary Kft., 2347 Bugyi (HU)
(72) Erfinder: Kutschelis, Kevin, 58675 Hemer (DE); Ludwig, Henrik, 58706 Menden (DE); Messy, Christian, 58708 Menden (DE); Schmidt, Michael, 58730 Fröndenberg/Ruhr (DE)
(74) Vertreter: Haverkamp Patentanwälte PartG mbB

(56) Entgegenhaltungen:
- EP-B1- 2 824 784
- DE-U1-202015 101 801
- FR-A1- 3 059 481
- FR-A1- 3 076 103

## Beschreibung

Die Erfindung betrifft eine Installationsdose für eine Hohlwandinstallation zur Aufnahme elektrischer/elektronischer Komponenten umfassend einen einen ersten, durch eine Montageöffnung zugänglichen Installationshohlraum bereitstellenden Dosenkörper, hergestellt zumindest anteilig aus einem Hartkunststoff, und einen einen zweiten Installationshohlraum bereitstellenden, von dem Dosenkörper seitlich abgehenden Installationsstutzen.

Installationsdosen für die Elektroinstallation werden in unterschiedlich ausgeführte Wände eingebaut, und zwar sowohl in Massivwände als auch in Hohlwände. Eine solche Installationsdose umfasst einen Dosenkörper mit einer nach außen hin offenen Montageöffnung zum Bestücken der Installationsdose. Der Dosenkörper dient zur Aufnahme von in einer solchen Installationsdose zu installierenden elektrischen und/oder elektronischen Geräte, Anschlussklemmen und dergleichen. Ist eine solche Installationsdose für eine Hohlwandinstallation ausgelegt, wird diese auch als Hohlwanddose angesprochen.

Wenn die zu montierenden elektrischen/elektronischen Komponenten nicht in den Dosenkörper einer Installationsdose einpassen, müssen bei einer Massivwand zwei Installationsdosen nebeneinander gesetzt werden. Bei Installationen an Hohlwänden kann der in den meisten Fällen mit Dämmmaterial gefüllte Hohlraum, der an die zum Einsetzen des Dosenkörpers in die äußere Wandschale eingebrachte Montageöffnung grenzt, zum Unterbringen von elektrischen/elektronischen Komponenten genutzt werden. In einem solchen Fall werden zur Unterbringung der elektrischen/elektronischen Komponenten Installationsdosen eingesetzt, die über einen an den Dosenkörper angeschlossenen Installationsstutzen verfügen. Dieser geht seitlich und damit in radialer Richtung von dem Dosenkörper weg. In einer Seitenansicht ist eine solche Installationsdose daher L-förmig ausgeführt, wobei der längere Schenkel zumeist den Installationsstutzen darstellt. Der Installationsstutzen ist in den meisten Fällen an den Dosenkörper angeformt. Der innere Hohlraum des Installationsstutzens mündet in den Installationsraum des Dosenkörpers, sodass durch den Installationsstutzen der durch den Dosenkörper bereitgestellte Installationsraum um den durch den Installationsstutzen bereitgestellten zusätzlichen Installationsraum vergrößert ist. Der Installationsstutzen ist ansonsten verschlossen.

Nicht immer unproblematisch ist die Montage einer solchen Installationsdose, vor allem dann, wenn der Abstand der äußeren Schale einer Hohlwand von der inneren Schale recht eng bemessen ist. Erschwerend kommt in vielen Fällen hinzu, dass der Durchmesser der in die äußere Schale der Hohlwand eingebrachten Montageöffnung ziemlich exakt auf den Außendurchmesser des Dosenkörpers abgestimmt ist, da der die Montageöffnung begrenzende, von dem Dosenkörper in radialer Richtung abragende Montageflansch nur eine geringe Breite aufweist.

Um diesem Problem zu begegnen, ist in EP 2 824 784 B1 vorgeschlagen worden, dass der an eine Zylinderform angenäherte Dosenkörper zumindest in seinem Fersenbereich aus weichelastischem Material besteht, damit dieser Teil des Dosenkörpers in den Installationshohlraum des Dosenkörpers hinein gestülpt werden kann, wenn diese Installationsdose in eine wandseitig eingebrachte Montageöffnung einer Hohlwand eingesetzt wird. Der Installationsstutzen selbst besteht aus Hartkunststoff.

In DE 20 2015 101 801 U1 ist eine weitere Installationsdose dieser Art beschrieben. Bei dieser Installationsdose ist der Installationsstutzen deformierbar ausgeführt, und zwar derart, dass er in den Installationshohlraum des Dosenkörpers hinein umstülpbar ist. Bei dieser Installationsdose wird der Installationsstutzen, wenn in den Dosenkörper hinein eingestülpt, in die Montageöffnung der wandseitigen Öffnung eingesetzt und anschließend ausgestülpt, sodass sich der Installationsstutzen dann hinter der ersten Schale der Hohlwand befindet. Diese Installationsdose braucht zum Einbringen des Installationsstutzens hinter die äußere Schale der Hohlwand nicht hineingeschwenkt zu werden. Dieses ist bei der aus EP 2 824 784 B1 bekannten Installationsdose der Fall, weshalb zur Verringerung des benötigten Raumes die Ferse des Dosenkörpers in den Dosenkörper hineinstülpbar ist.

Bei dem Gegenstand der DE 20 2015 101 801 U1 können die darin aufzunehmenden elektrischen/elektronischen Komponenten erst nach einer Montage der Installationsdose eingebaut und verdrahtet werden, da der von dem Installationsstutzen bereitgestellte Installationshohlraum bei der Montage nicht zur Verfügung steht, ebenso wenig wie der Installationshohlraum des Dosenkörpers, in dem sich der umgestülpte Installationsstutzen befindet. Zwar ist beim Gegenstand der in EP 2 824 784 B1 beschriebenen Installationsdose eine Bestückung des Installationsstutzens mit elektrischen/elektronischen Komponenten vor einer wandseitigen Montage der Installationsdose möglich. Jedoch kann der Installationshohlraum des Dosenkörpers nicht vorinstalliert werden, da dieser zur Aufnahme der weichelastischen Ferse zur Verfügung stehen muss.

FR 3 076 103 A1 offenbart eine weitere Installationsdose für eine Hohlwandinstallation mit einem seitlich davon abgehenden Installationsstutzen. Der Installationsstutzen umfasst ein an den Dosenkörper angeformtes Installationsstutzenteil, welches sich etwa über die Hälfte der Länge des Installationsstutzens erstreckt. Angeschlossen an dieses Installationsstutzenteil befindet ein aus Weichkunststoffmaterial hergestelltes Deckelteil.

Aus FR 3 059 481 A1 ist eine weitere Installationsdose bekannt. Ihr seitlich abgehender Installationsstutzen ist insgesamt aus einer Hartkunststoffkomponente gefertigt.

Ausgehend von diesem diskutierten Stand der Technik liegt der Erfindung daher die Aufgabe zugrunde, eine Installationsdose für die Hohlwandinstallation der eingangs genannten Art dergestalt weiterzubilden, dass diese nicht nur variabler in ihrer Anwendung, sondern die auch mit elektrischen/elektronischen Komponenten vorinstalliert und verdrahtet wandseitig montiert werden kann.

Gelöst wird diese Aufgabe erfindungsgemäß durch eine eingangs genannte, gattungsgemäße Installationsdose, bei der der Installationsstutzen wenigstens eine an den Hartkunststoff des Dosenkörpers angeformte, sich über seine Längserstreckung erstreckende, schubsteife und in Richtung der Ebene der Montageöffnung elastisch flexible Formleiste als Teil der umlaufenden Wand des Installationsstutzens aufweist und bei der die umlaufende Wand des Installationsstutzens in Umfangsrichtung seines Installationshohlraumes mit Ausnahme der wenigstens einen Formleiste aus Hartkunststoff aus einem flexiblen Weichkunststoff hergestellt ist.

Eine erfindungsgemäße Installationsdose ist in Anspruch 1 definiert. Bevorzugte Ausführungsformen sind in den abhängigen Ansprüchen definiert.

Bei dieser Installationsdose ist, wie dieses für derartige Installationsdosen üblich ist, der Dosenkörper zumindest teilweise aus einer Hartkunststoffkomponente gefertigt. In aller Regel sind darin eingebrachte Rohr- oder Kabeleinführungen mit einer Weichkunststoffmembran verschlossen. Der Hartkunststoff verleiht dem Dosenkörper seine Formstabilität. Der für diese Zwecke verwendete Kunststoff ist hinreichend formstabil, hat jedoch, wie dieses für derartige Produkte üblich ist, eine gewisse Flexibilität. Dieser Hartkunststoff ist bei bestimmungsgemäßer Benutzung nicht dehnbar. Die Weichkunststoffkomponente ist gegenüber der Hartkunststoffkomponente wesentlich weicher, elastisch und dehnbar. Angeschlossen ist bei dieser Installationsdose an den Hartkunststoff des Dosenkörpers, von diesem seitlich abgehend, eine Formleiste. Typischerweise ist diese an den Hartkunststoff des Dosenkörpers angeformt, mithin einstückig mit diesem hergestellt. Grundsätzlich können auch mehrere Formleisten von dem Dosenkörper abgehen. Es ist allerdings ausreichend, wenn für die nachstehend geschilderten Zwecke an den Dosenkörper eine einzige Formleiste angeformt ist. Die Formleiste erstreckt sich in Richtung der Längserstreckung des Installationsstutzens. Die Formleiste selbst kann als gerade Leiste ausgeführt sein. Die Formleiste kann jedoch auch eine hiervon abweichende Geometrie aufweisen, beispielsweise nach Art eines Mäanders und somit wellenförmig geformt sein. Diese Formleiste ist Teil der umlaufenden Wand des Installationsstutzens, typischerweise Teil einer Seitenwand, kann eine solche jedoch auch insgesamt ausmachen. Die Formleiste ist typischerweise nach Art eines Endoskelettes in die umlaufende Wand, beispielsweise in eine Seitenwand des Installationsstutzens integriert. Möglich ist auch eine Ausgestaltung, bei der die Formleiste nach Art eines Exoskelettes benachbart zu einem Abschnitt der umlaufenden Wand des Installationsstutzens angeordnet ist, wobei in einem solchen Falle eine außenseitige Anordnung bevorzugt wird. Eine Anordnung innerhalb des Installationsstutzens ist jedoch auch grundsätzlich möglich. Die Formleiste ist in Querrichtung zur Längserstreckung des Installationsstutzens flexibel, sodass sie gegenüber dem Dosenkörper elastisch um die für eine Montage in einer Hohlwand benötigten Winkelgrade gebogen werden kann. Für die Zwecke der Installation ist eine Verstellbarkeit der Formleiste in Richtung zur Montageöffnung des Dosenkörpers vorgesehen. In Umfangsrichtung gesehen ist angrenzend an die zumindest eine Formleiste der Installationsstutzen aus einem flexiblen Weichkunststoff hergestellt. Damit kann bei dieser Installationsdose der Installationsstutzen in der durch die Formleiste zugelassenen Biegerichtung elastisch gebogen werden. Hierdurch ist ein Einbringen des Installationsstutzens in den Hohlraum einer Hohlwand durch Verschwenken möglich, wobei lediglich der Installationsstutzen in Querrichtung zu seiner Längserstreckung entsprechend gebogen wird. Die elastische Ausführung der Formleiste ist mit dafür verantwortlich, dass sich der Installationsstutzen, wenn in den Schalenzwischenraum der Hohlwand eingesetzt, in seine Ausgangsform zurückstellt, in der die Längsachse des Installationsstutzens gerade ist.

Eine solche Installationsdose kann aus diesem Grunde ohne weiteres auch an der äußeren Schale einer Hohlwand montiert werden, bei welcher Hohlwand der Abstand der beiden Schalen voneinander nur relativ gering ist, beispielsweise die Schalen nur einen solchen Abstand voneinander aufweisen, dass der Dosenkörper mit seiner Tiefe montiert werden kann. Die Formleiste wirkt für den Installationsstutzen wie ein Rückgrat und schützt in seinem Installationshohlraum vorinstallierte elektrische und/oder elektronische Komponenten. Diese sind in dem Installationshohlraum des Installationsstutzens dergestalt angeordnet, damit diese den Biegevorgang beim Montieren der Installationsdose mitmachen können. Bei mehreren einzelnen, darin vormontierten Komponenten ist dieses unproblematisch, da diese gegeneinander bewegt werden können.

Vorzugsweise befindet sich die Formleiste an der der Montageöffnung gegenüberliegenden Seitenwand des Installationsstutzens. Dann befindet sich die Formleiste bei der Montage an einer Hohlwand an der Außenseite, wenn der Installationsstutzen gebogen wird, und schützt damit seinen Installationshohlraum gegenüber einem Eindrücken, sodass seine lichte Höhe zumindest weitestgehend erhalten bleibt. Auf diese Weise können Beschädigungen infolge der beschriebenen Flexibilität des Installationsstutzens bei der Montage der Installationsdose minimiert werden.

Um die für eine Deformation des Installationsstutzens erforderlichen Kräfte gering zu halten, ist bei einer Ausgestaltung dieser Installationsdose vorgesehen, dass die Breite der Formleiste nur etwa 15 - 30 % der Breite der Seitenwand des Installationsstutzens aufweist, in die diese integriert ist. Zu berücksichtigen ist hierbei, dass die Biegung des Installationsstutzens letztendlich durch das Anstoßen seines Endes an der inneren Schale ausgelöst wird, wenn die Installationsdose mit ihrem Installationsstutzen in eine in die äußere Schale der Hohlwand eingebrachte Montageöffnung eingeschwenkt wird. Da die Formleiste sich bevorzugt an der von der Montageöffnung des Dosenkörpers wegweisenden Seitenwand des Installationsstutzens befindet, wird durch diese der Installationsstutzen auch vor einem Zusammenstauchen bewahrt, was bei dem eingesetzten Weichkunststoff ansonsten der Fall wäre. Somit werden auch in dem Installationsstutzen unter Umständen vorinstallierte elektrische/elektronische Komponenten geschützt.

Der Installationsstutzen ist endseitig typischerweise verschlossen. Gemäß einer bevorzugten Ausgestaltung ist an das von dem Dosenkörper wegweisende Ende der Formleiste ein Ringkörper an der Hartkunststoffkomponente angeformt. Dieser Ringkörper kann einen Boden aufweisen, durch den der Ringkörper verschlossen ist. Sodann bildet der Ringkörper mit seinem Boden einen an die übrigen Bestandteile des Installationsstutzens angeformten Verschluss. Gemäß einem anderen Ausführungsbeispiel verfügt der an die Formleiste angeformte Ringkörper nicht über einen Boden und ist mithin offen. Verschlossen wird der Installationsstutzen bei dieser Ausgestaltung durch eine separate Verschlusskappe. Diese verfügt typischerweise über eine umlaufende Seitenwand, die zum Verschließen des durch den Installationsstutzen bereitgestellten Installationshohlraums mit dem Ringkörper überlappt. Auf diese Weise lässt sich ohne weiteres eine Rastverbindung zwischen der Verschlusskappe und dem Ringkörper realisieren, beispielsweise dadurch, dass eines der beiden Elemente einen oder mehrere Rastvorsprünge und das andere Element eine der Anzahl der Rastvorsprünge entsprechende Anzahl an Rastvorsprungsfallen aufweist. Diese beiden paarweise zusammenwirkenden Rastelemente sind angeordnet, dass ein Rastvorsprung in eine Rastvorsprungsfalle eingreift, wenn die Verschlusskappe an dem Ringkörper montiert ist. Der Anschluss einer solchen Verschlusskappe an den Ringkörper kann lösbar ausgelegt sein.

Ist der Installationsstutzen mit einem endseitigen Ringkörper aus der Hartkunststoffkomponente gefertigt, kann diese nicht nur als Kupplungsstück zum Anschließen einer Verschlusskappe verwendet werden, sondern auch zum Anschließen einer Installationsstutzenverlängerung. Eine solche Installationsstutzenverlängerung ist letztendlich aufgebaut wie der an den Dosenkörper angeformte Installationsstutzen, weist jedoch an seiner an dem Installationsstutzen vorgesehenen Anschlussseite ein zu dem Ringkörper des Installationsstutzens komplementäres Kupplungsteil auf, typischerweise einen komplementären Ringkörper. Beide Ringkörper können rastend miteinander verbunden werden bzw. sein. Das gegenüberliegende Ende der Installationsstutzenverlängerung ist typischerweise ebenso aufgebaut wie das Ende des Installationsstutzens selbst, und zwar ausgerüstet mit einem Ringkörper als Kupplungsstück für eine Verschlusskappe oder auch für noch eine weitere Installationsstutzenverlängerung. Infolge dieser Schnittstelle am freien Ende des Installationsstutzens ist eine solche Installationsdose modular aufgebaut und kann den jeweiligen Erfordernissen entsprechend hinsichtlich des von dem Dosenkörper abgehenden Installationshohlraums größer oder kleiner ausgebildet werden. Aufgrund der Biegbarkeit des Installationsstutzens und des oder der Installationsstutzenverlängerungen, die ebenfalls jeweils über zumindest eine Formleiste verfügen, typischerweise an derselben Seitenwand, an der sich die Formleiste des Installationsstutzens befindet, kann der verlängerte Installationsstutzen ohne weiteres durch eine in die äußere Schale der Hohlwand eingebrachte Montageöffnung eingeführt und eingeschoben werden. Gerade bei längeren Installationsstutzen oder verlängerten Installationsstutzen machen sich die schubsteifen Eigenschaften der einen oder mehreren Formleisten bemerkbar, da dieses ein Einschieben in den Hohlraum der Hohlwand ohne ein Stauchen des Installationshohlraums und/oder einer Installationsstutzenverlängerung in Kauf nehmen zu müssen.

Der von dem Dosenkörper wegweisende Abschluss des Installationsstutzens ist typischerweise schräg angestellt, um eine Stellfläche bereitzustellen, durch die die Richtung der Biegung des Installationsstutzens (mit oder ohne Installationsstutzenverlängerung) in die vorgesehene Richtung gestellt wird.

Nachfolgend ist die Erfindung anhand eines Ausführungsbeispiels unter Bezugnahme auf die beigefügten Figuren beschrieben. Es zeigen:
- **Fig. 1:**: Eine perspektivische Ansicht einer erfindungsgemäßen Installationsdose,
- **Fig. 2:**: eine Seitenansicht der Installationsdose der Figur 1,
- **Fig. 3:**: eine Rückseitenansicht der Installationsdose der Figur 1,
- **Fig. 4:**: einen Schnitt durch die Installationsdose der Figur 3 entlang der Linie A - B,
- **Fig. 5:**: die Installationsdose in einer Seitenansicht gemäß Figur 2 mit seinem elastisch deformierten Installationsstutzen beim Montieren derselben in eine Hohlwand,
- **Fig. 6:**: die in einer Hohlwand montierte Installationsdose der vorangegangenen Figuren und
- **Fig. 7:**: die Installationsdose der Figur 1 mit einer zusätzlichen Installationsstutzenverlängerung nach Art einer Explosionsdarstellung.

Eine für die Hohlwandinstallation vorgesehene Installationsdose 1 verfügt über einen Dosenkörper 2. Der Dosenkörper 2 ist im Wesentlichen aufgebaut wie der Dosenkörper einer an sich bekannten Installationsdose, in die elektrische und/oder elektronische Komponenten installiert werden sollen. Diesem Zweck dient auch die Installationsdose 1. Der Dosenkörper 2 verfügt über eine durch einen über den äußeren Abschluss des Dosenkörpers 2 vorspringenden, umlaufenden Montageflansch 3. Durch diesen ist eine Montageöffnung 4 eingefasst. Durch die Montageöffnung 4 kann der durch den Dosenkörper 2 bereitgestellte Installationshohlraum bestückt werden.

Ebenso wie herkömmliche Installationsdosen verfügt auch der Dosenkörper 2 der Installationsdose 1 über Mittel zum Verspannen derselben an der äußeren Schale einer Hohlwand. Bei diesen Spannmitteln handelt es sich um Spannschrauben (in der Figur nicht dargestellt), die mit ihrem Kopf in eine Kopfaufnahme 5 benachbart zu dem Montageflansch 3 eingreifen und mit ihrem Schraubenschaft in einem Schraubenkanal 6 angeordnet sind. Auf das freie Ende des in dem Schraubenkanal 6 befindlichen Schraubenschaftes ist ein Klemmplättchen aufgeschraubt (ebenfalls nicht dargestellt).

Wie herkömmliche Installationsdosen auch, ist der Dosenkörper 2 weitestgehend aus einer Hartkunststoffkomponente hergestellt. Vorgesehene Rohr- bzw. Kabeleinführungen, die durch Öffnungen in dem Dosenkörper vorbereitet sind, sind mit jeweils einer Weichkunststoffmembran 7 überspannt.

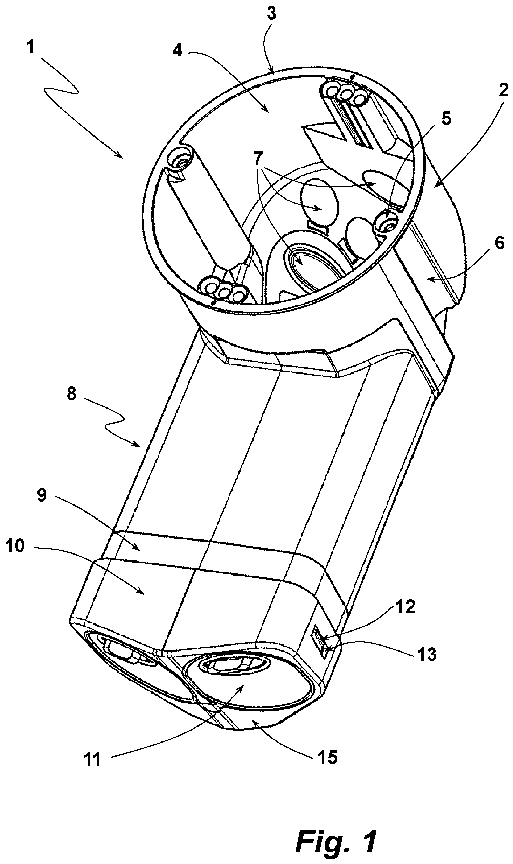

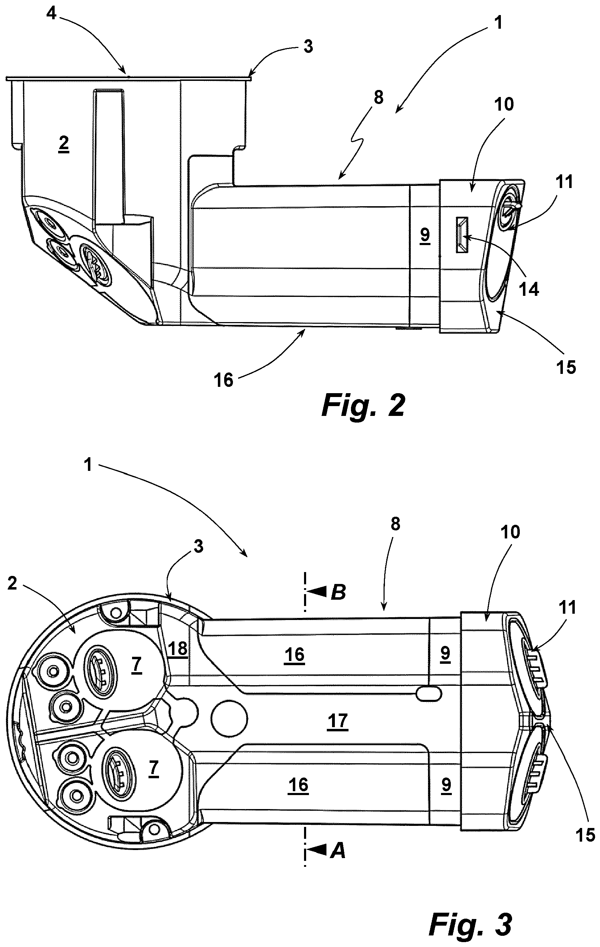

Die Installationsdose 1 verfügt über einen Installationsstutzen 8, der seitlich und somit in radialer Richtung von dem Dosenkörper 2 abgeht. Durch den Installationsstutzen 8 ist der zur Verfügung stehende Installationshohlraum vergrößert, und zwar um den durch den Installationsstutzen 8 bereitgestellten Installationshohlraum. Der Installationsstutzen 8 ist an den Dosenkörper 2 angeformt. Der Installationsstutzen 8 besteht bei dem dargestellten Ausführungsbeispiel in seinem Umfang gesehen weitestgehend aus der Weichkunststoffkomponente. An seinem dem Dosenkörper 2 gegenüberliegenden Ende befindet sich ein Ringkörper 9 der Hartkunststoffkomponente. Bei dem dargestellten Ausführungsbeispiel stellt der Ringkörper 9 ein Kupplungsteil dar, auf das, wie aus Figur 1 ersichtlich, eine Verschlusskappe 10 zum Verschließen des Installationsstutzens 8 an seiner von dem Dosenkörper 2 wegweisenden Seite aufgesetzt ist. Die Verschlusskappe 10 ist aus der Hartkunststoffkomponente gefertigt und trägt bodenseitig Rohr- bzw. Kabelauslässe, die ebenfalls mit jeweils einer Weichkunststoffmembran 11 verschlossen sind. Der Ringkörper 9 des Installationsstutzens 8 trägt an seinen Schmalseiten nach außen abragende Rastvorsprünge 12, von denen aufgrund der Perspektive in Figur 1 nur einer gezeigt ist. Dieser greift ein in eine Rastvorsprungsfalle 13 der ringförmigen Seitenwand der Verschlusskappe 10. Diese ist mithin durch die auf jeder Schmalseite befindliche Rastverbindung an den Installationsstutzen 8 angeschlossen. Diese Rastverbindung ist lösbar, und zwar dadurch, dass der Ringkörper 9 an seinen Schmalseiten etwas eingedrückt wird, wodurch die in die Rastvorsprungsfallen 13 eingreifenden Rastvorsprünge 12 aus den Rastvorsprungsfallen 13 herausbewegt werden, sodass dann die Verschlusskappe 10 abgezogen werden kann. Zum erleichterten Aufclipsen der Verschlusskappe 10 auf den Ringkörper 9 des Installationsstutzens 8 sind die Rastvorsprünge 12 an ihrer von dem Dosenkörper 2 wegweisenden Seite mit einer geneigten Stellschräge ausgestattet. Diese ist in Figur 2 erkennbar und mit dem Bezugszeichen 14 kenntlich gemacht.

Die Verschlusskappe 10 ist, wie aus der Seitenansicht der Figur 2 erkennbar, bezüglich der Ausrichtung ihres Bodens 15 geneigt ausgeführt, und zwar in Richtung zu der von der Montageöffnung 4 des Dosenkörpers 2 wegweisenden Seitenwand 16 des Installationsstutzens 8 hin. Bei der Seitenwand 16 handelt es sich um die Rückseitenwand, mithin diejenige Seitenwand, die von der Montageöffnung 4 abgekehrt ist. Die in Figur 1 und Figur 2 erkennbaren Bestandteile des Installationsstutzens 8 sind mit Ausnahme seines Ringkörpers 9 aus der Weichkunststoffkomponente hergestellt.

Figur 3 zeigt eine Ansicht der Installationsdose 1 auf seine rückwärtige der Ebene der Montageöffnung 4 gegenüberliegende Seitenwand 16. In die Seitenwand 16 ist eine Formleiste 17 aus der Hartkunststoffkomponente, aus der auch die Hartkunststoffkomponente des Dosenkörpers 2 hergestellt ist, integriert. Die Formleiste 17 ist, wie in Figur 3 erkennbar, an die Hartkunststoffkomponente des Bodens 18 des Dosenkörpers 2 angeformt. Die Formleiste 17 erstreckt sich entlang der Längserstreckung des Installationsstutzens 8 und verbindet den Ringkörper 9 mit der Hartkunststoffkomponente des Bodens 18 des Dosenkörpers 2. Die Formleiste 17 hat bei dem dargestellten Ausführungsbeispiel eine Breite von etwa 25 % der in Figur 3 erkennbaren Breitenerstreckung der Seitenwand 16. Die Materialstärke der Formleiste 17 entspricht der Materialstärke der Wand des Dosenkörpers 2.

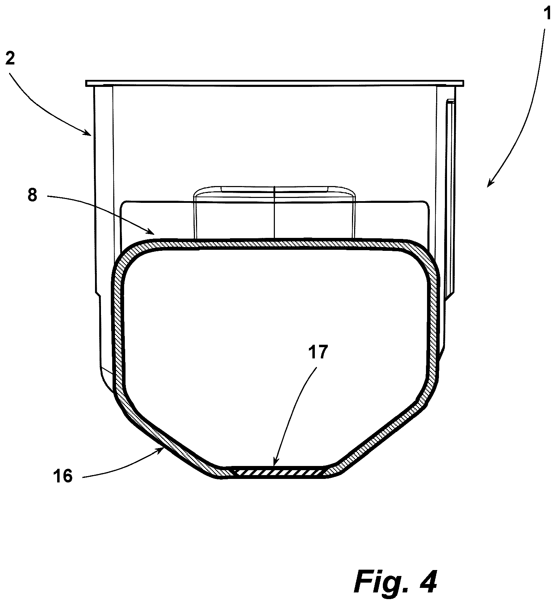

Aus der Schnittdarstellung der Figur 4 ist erkennbar, wie die Formleiste 17 in die umlaufende Wand des Installationsstutzens 8 eingearbeitet ist, und zwar bei dem dargestellten Ausführungsbeispiel in die Seitenwand 16. Die Formleiste 17 stellt einen Abschnitt in der umlaufenden Wand des Installationsstutzens 8 dar und, da sich diese in der Seitenwand 16 befindet, einen Teil derselben.

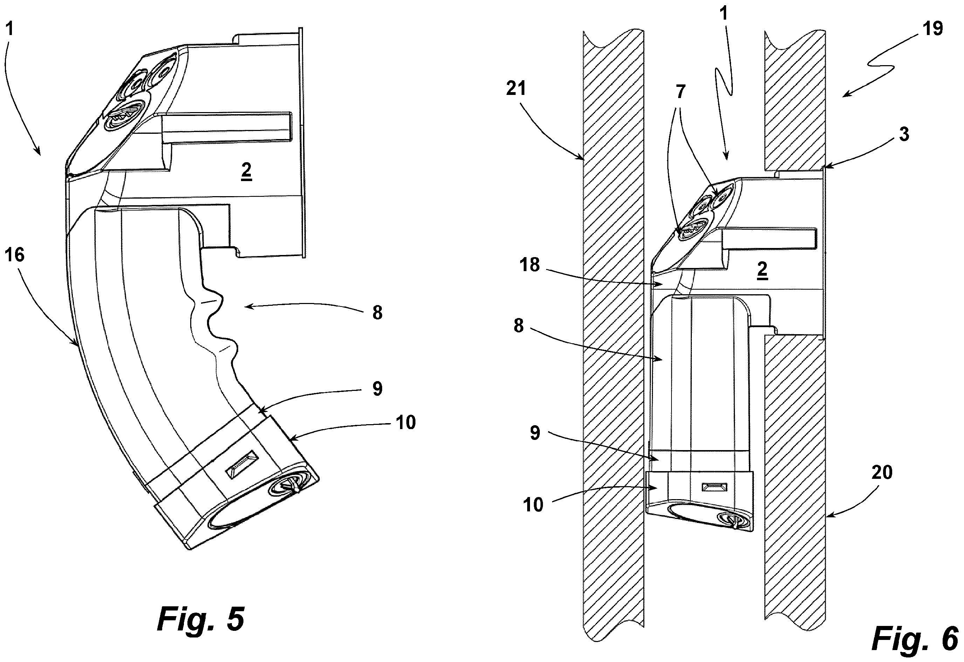

Figur 3 verdeutlicht nochmals die Ausbildung des Bodens 15 der Verschlusskappe 10 hinsichtlich der bereits vorbeschriebenen Neigung. Deutlich wird aus dieser Darstellung auch, dass der Boden 15 ausgehend von seiner Mitte zu den beiden Schmalseiten des Installationsstutzens 8 hin ebenfalls geneigt ist. Durch diese V-förmige Ausgestaltung des Bodens 15 der Verschlusskappe 10 kann in der Hohlwand befindliches Dämmmaterial zur Seite gedrängt werden. Demselben Zweck dient auch die bereits vorstehend beschriebene Neigung des Bodens 15 zur Seitenwand 16 hin, wobei die diesbezügliche Neigung auch als Stellschräge zum Induzieren einer Verstellung des Installationsstutzens 8 bei einer Montage der Installationsdose 1 an der äußeren Schale einer Hohlwand dient. Die Neigung des Bodens 15 ist ausgelegt, dass bei einem entsprechenden Kontakt an der den Hohlraum der Hohlwand begrenzenden Seite der inneren Schale der Installationsstutzen 8, wie aus Figur 5 erkennbar, elastisch deformiert (gebogen) wird. Für ein Einschwenken des Installationsstutzens 8 aus einer Montagebohrung in der äußeren Schale der Hohlwand in den Hohlraum hinein, braucht der Abstand der Schalen der Hohlwand nicht übermäßig groß sein. Durch die durch die Biegung hervorgerufene Verformung des Installationsstutzens 8 bleibt das von diesem bereitgestellte Installationsvolumen jedenfalls hinsichtlich seiner in Figur 5 erkennbaren Höhe weitestgehend erhalten, sodass die Installationsdose 1, bereits mit elektrischen/elektronischen Komponenten bestückt, an einer Hohlwand montiert werden kann. Eine Bestückung des Installationsstutzens 8 erfolgt derart, dass diese die in Figur 5 gezeigte Verformung des Installationsstutzens 8 mitmachen können.

Befindet sich der Installationsstutzen 8 in dem Hohlraum einer Hohlwand, sorgt die Formleiste 17 dafür, dass sich der Installationsstutzen 8 wieder in seine in den vorangegangenen Figuren gezeigte Form zurückstellt.

Figur 6 zeigt die an einer Hohlwand 19 montierte Installationsdose 1. Ihr Montageflansch 3 liegt an der Außenseite der äußeren Schale 20 der Hohlwand 19 an bzw. ist in eine entsprechende Montageflanschvertiefung eingesetzt. Der Abstand der äußeren Schale 20 von der inneren Schale 21 der Hohlwand 19 ist, wie aus Figur 6 erkennbar, recht gering. Der Abstand der beiden Schalen 20, 21 voneinander entspricht dem benötigten Abstand, um den Dosenkörper 2 der Installationsdose 1 hinsichtlich seiner Tiefe aufnehmen zu können.

Der Boden 18 des Dosenkörpers 2 ist, wie aus Figur 6 (und auch aus Figur 2) ersichtlich, an seiner von dem Installationsstutzen 8 wegweisenden Seite in Richtung zum Montageflansch 3 hin geneigt ausgeführt. Dieses ist für die Installationsdose 1 sinnvoll, da dieses eine Einschwenkbewegung derselben in die in die äußere Schale 20 eingebrachte Montagebohrung erleichtert. Bei Hohlwänden mit geringem Abstand der äußeren Schale 20 von der inneren Schale 21 wird hierdurch jedoch auch eine Rohr- und/oder Kabelausführung aus den durch eine Weichkunststoffmembran 7 verschlossenen Auslässe erleichtert.

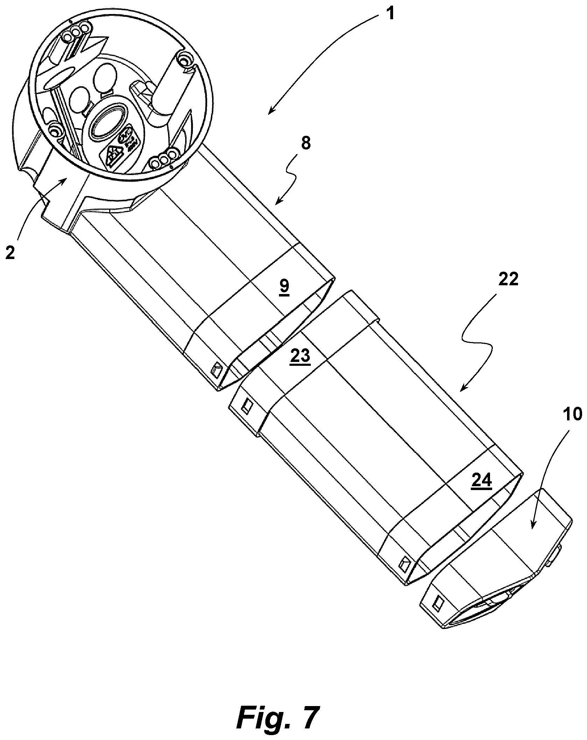

Figur 7 zeigt die Installationsdose 1 mit ihrem Installationsstutzen 8, ergänzt um eine Installationsstutzenverlängerung 22. Die Installationsstutzenverlängerung 22 ist aufgebaut wie der Installationsstutzen 8. Daher verfügt die Installationsstutzenverlängerung 22 ebenfalls über eine in ihrem Rücken befindliche Formleiste. Die Installationsstutzenverlängerung 22 trägt an ihrem einen Ende einen ersten Ringkörper 23, der der ringförmigen Seitenwand der Verschlusskappe 10 nachempfunden ist und somit ebenso wie dies zuvor zu der Verschlusskappe 10 beschrieben wurde, an dem Ringkörper 9 befestigbar ist. Figur 7 zeigt die Installationsstutzenverlängerung 22 noch von dem Ringkörper 9 des Installationsstutzens 8 getrennt. An dem anderen Ende trägt die Installationsstutzenverlängerung 22 einen zweiten Ringkörper 24. Dieser ist ausgeführt wie der Ringkörper 9 und dient zum Anschließen der Verschlusskappe 10. Es versteht sich, dass an den Ringkörper 24 auch eine weitere Installationsstutzenverlängerung 22 angeschlossen werden kann.

Durch Verwendung einer oder auch mehrerer derartiger Installationsstutzenverlängerungen 22 kann der durch den vom Dosenkörper 2 abgehende Gesamtinstallationshohlraum von seinem Volumen her an das Volumen der aufzunehmenden elektrischen und/oder elektronischen Komponenten angepasst werden. Somit wird auf diese Weise der in einer Hohlwand vorhandene Hohlraum auch für die Unterbringung von elektrischen/elektronischen Komponenten genutzt.

Da die Installationsstutzenverlängerung 22 ebenso aufgebaut ist wie der Installationsstutzen 8 und seine aus der Hartkunststoffkomponente gefertigte Formleiste die Ringkörper 23 und 24 verbindet und die übrigen Bestandteile der Installationsstutzenverlängerung 22 aus der Weichkunststoffkomponente gebildet sind, ist auch die Installationsstutzenverlängerung 22 verformbar wie dieses in Figur 5 anhand des Installationsstutzens 8 gezeigt ist.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, diese umsetzen, ohne dass dieses im Rahmen dieser Ausführungen im Einzelnen erläutert werden müsste.

### Bezugszeichenliste

- 1: Installationsdose
- 2: Dosenkörper
- 3: Montageflansch
- 4: Montageöffnung
- 5: Kopfaufnahme
- 6: Schraubenkanal
- 7: Weichkunststoffmembran
- 8: Installationsstutzen
- 9: Ringkörper
- 10: Verschlusskappe
- 11: Weichkunststoffmembran
- 12: Rastvorsprung
- 13: Rastvorsprungsfalle
- 14: Stellschräge
- 15: Boden
- 16: Seitenwand
- 17: Formleiste
- 18: Boden
- 19: Hohlwand
- 20: äußere Schale
- 21: innere Schale
- 22: Installationsstutzenverlängerung
- 23: Ringkörper
- 24: Ringkörper

## Patentansprüche

1. Installationsdose für eine Hohlwandinstallation zur Aufnahme elektrischer/elektronischer Komponenten umfassend einen einen ersten, durch eine Montageöffnung (4) zugänglichen Installationshohlraum bereitstellenden Dosenkörper (2), hergestellt zumindest anteilig aus einem Hartkunststoff, und einen einen zweiten Installationshohlraum bereitstellenden, von dem Dosenkörper (2) seitlich abgehenden Installationsstutzen (8), wobei der Installationsstutzen (8) wenigstens eine an den Hartkunststoff des Dosenkörpers (2) angeformte, sich über seine Längserstreckung erstreckende, schubsteife und in Richtung der Ebene der Montageöffnung (4) elastisch flexible Formleiste (17) als Teil der umlaufenden Wand des Installationsstutzens (8) aufweist und dass die umlaufende Wand des Installationsstutzens (8) in Umfangsrichtung seines Installationshohlraumes mit Ausnahme der wenigstens einen Formleiste (17) aus Hartkunststoff aus einem flexiblen Weichkunststoff hergestellt ist.

2. Installationsdose nach Anspruch 1, **dadurch gekennzeichnet, dass** der Installationsstutzen (8) eine einzige Formleiste (17) aufweist.

3. Installationsdose nach Anspruch 2, **dadurch gekennzeichnet, dass** sich die Formleiste (17) in oder an einer von der Montageöffnung (4) des Dosenkörpers (2) wegweisenden Seitenwand (16) des Installationsstutzens (8) befindet.

4. Installationsdose nach einem der Ansprüche 1 bis 3, **dadurch gekennzeichnet, dass** die zumindest eine Formleiste (17) gerade ausgeführt ist.

5. Installationsdose nach Anspruch 3 oder 4, **dadurch gekennzeichnet, dass** die Formleiste (17) eine Breite aufweist, die etwa 15 - 35 % der Breite der Seitenwand (16) entspricht.

6. Installationsdose nach einem der Ansprüche 1 bis 5, **dadurch gekennzeichnet, dass** an das von dem Dosenkörper (2) wegweisende Ende der Formleiste (17) aus demselben Material ein Ringkörper (9) angeformt ist.

7. Installationsdose nach Anspruch 6, **dadurch gekennzeichnet, dass** der Ringkörper zum Verschließen des zweiten Installationshohlraums einen seine Ringöffnung verschließenden Boden trägt.

8. Installationsdose nach Anspruch 6, **dadurch gekennzeichnet, dass** zum Verschließen des zweiten Installationshohlraums der Installationsdose (1) eine Verschlusskappe (10) mit einer ringförmigen Seitenwand zugeordnet ist, deren ringförmige Seitenwand an den an die Formleiste (17) angeformten Ringkörper (9) lösbar befestigbar ist.

9. Installationsdose nach Anspruch 8, **dadurch gekennzeichnet, dass** zum Befestigen der Verschlusskappe (10) an dem Ringkörper (9) die Seitenwand der Verschlusskappe (10) mit dem Ringkörper (9) überlappend angeordnet ist.

10. Installationsdose nach Anspruch 8, **dadurch gekennzeichnet, dass** zur Befestigung der Verschlusskappe (10) an dem Ringkörper (9) des Installationsstutzens (8) eines dieser beiden Elemente wenigstens einen Rastvorsprung (12) und das andere Element wenigstens eine Rastvorsprungsfalle (13) aufweist, in die der Rastvorsprung (12), wenn die Verschlusskappe (10) an den Ringkörper (9) angeschlossen ist, eingreift.

11. Installationsdose nach einem der Ansprüche 1 bis 10, **dadurch gekennzeichnet, dass** der von dem Dosenkörper (2) wegweisende Abschluss des Installationsstutzens (10) gegenüber der Längsachse des Dosenkörpers (2) geneigt ist, sodass die in Richtung zur Montageöffnung des Dosenkörpers (2) weisende Seite des Installationsstutzens (8) länger ist als seine dieser gegenüberliegenden Seite.

12. Installationsdose nach Anspruch 6 oder einem der Ansprüche 7 bis 11, soweit diese auf den Anspruch 6 rückbezogen sind,
**dadurch gekennzeichnet, dass** der Installationsdose (1) zum Vergrößern des zweiten Installationshohlraums seines Installationsstutzens (8) wenigstens eine zusätzliche Installationsstutzenverlängerung (22) zugeordnet ist, die an ihrem einen Ende ein Kupplungsstück (23) zum Anschließen desselben an den an die Formleiste (17) angeformten Ringkörper (9) aufweist.

13. Installationsdose nach Anspruch 12, **dadurch gekennzeichnet, dass** das Kupplungsstück (23) der Installationsstutzenverlängerung (22) aus einem Hartkunststoff besteht und an dieses eine seiner Längserstreckung folgende Formleiste angeformt ist.

14. Installationsdose nach Anspruch 13, **dadurch gekennzeichnet, dass** an die Formleiste an ihrem von dem Kupplungsstück (23) wegweisenden Ende aus demselben Material ein Ringkörper (24) angeformt ist.

15. Installationsdose nach Anspruch 14, **dadurch gekennzeichnet, dass** zum Verschließen der Installationsstutzenverlängerung (22) eine Verschlusskappe (10) mit einer ringförmigen Seitenwand vorgesehen ist, deren ringförmige Seitenwand an den an die Formleiste angeformten Ringkörper (24) lösbar befestigbar ist

16. Installationsdose nach Anspruch 15, **dadurch gekennzeichnet, dass** zum Befestigen der Verschlusskappe (10) an dem Ringkörper (24) der Installationsstutzenverlängerung (22) die Seitenwand der Verschlusskappe (10) mit dem Ringkörper (24) überlappend angeordnet ist und zur Befestigung der Verschlusskappe (10) an dem Ringkörper (9) eines der beiden Elemente wenigstens einen Rastvorsprung und das andere Element wenigstens eine Rastvorsprungsfalle aufweist, in die der Rastvorsprung bei an das Installationsstutzensegment angeschlossener Verschlusskappe eingreift.

17. Installationsdose nach einem der Ansprüche 1 bis 16, **dadurch gekennzeichnet, dass** der der Montageöffnung (4) des Dosenkörpers (2) gegenüberliegende Boden (18) an seiner dem Installationsstutzen (8) gegenüberliegenden Seite geneigt ist, wobei von der Neigung zumindest 50 % der Bodenfläche des Dosenkörpers (2) erfasst ist.

## Claims

1. Installation box for installation in a cavity wall for receiving electrical/electronic components, comprising a first box body (2) which is accessible through an installation opening (4) and provides an installation cavity, manufactured at least partially from a hard plastic, and an installation support (8), which provides a second installation cavity and extends laterally from the box body (2), wherein the installation support (8) comprises at least one shaped strip (17), moulded to the hard plastic of the box body (2) and extending over its longitudinal extension, rigid against thrust and elastically flexible in the direction of the plane of the installation opening (4), as a part of the circumferential wall of the installation support (8), and wherein the circumferential wall of the installation support (8), in the circumferential direction of its installation cavity, is manufactured from a flexible soft plastic, with the exception of the at least one shaped strip (17) made of hard plastic.

2. Installation box according to claim 1, **characterised in that** the installation support (8) comprises one single shaped strip (17).

3. Installation box according to claim 2, **characterised in that** the shaped strip (17) is located in or at a side wall (16) of the installation support (8), facing away from the installation opening (4) of the box body (2).

4. Installation box according to any one of claims 1 to 3, **characterised in that** the at least one shaped strip (17) is configured as straight.

5. Installation box according to claim 3 or 4, **characterised in that** the shaped strip (17) has a width which corresponds to approximately 15-35% of the width of the side wall (16).

6. Installation box according to any one of claims 1 to 5, **characterised in that** a ring body (9) is moulded onto the end of the shaped strip (17) facing away from the box body (2), and is made of the same material.

7. Installation box according to claim 6, **characterised in that,** in order to close the second installation cavity, the ring body carries a base which closes its ring-shaped opening.

8. Installation box according to claim 6, **characterised in that,** in order to close the second installation cavity, a closure cap (10) with a ring-shaped side wall is assigned to the installation box (1), of which the ring-shaped side wall can be detachably secured to the ring body (9) moulded to the shaped strip (17).

9. Installation box according to claim 8, **characterised in that,** in order to secure the closure cap (10) to the ring body (9), the side wall of the closure cap (10) is arranged overlapping the ring body (9).

10. Installation box according to claim 8, **characterised in that,** in order to secure the closure cap (10) to the ring body (9) of the installation support (8), one of these two elements comprises at least one latching projection (12), and the other element comprises at least one latching projection receiver (13), into which the latching projection (12) engages when the closure cap (10) is connected to the ring body (9).

11. Installation box according to any one of claims 1 to 10, **characterised in that** the termination of the installation support (10) facing away from the box body (2) is inclined in relation to the longitudinal axis of the box body (2) such that the side of the installation support (8) facing in the direction of the installation opening of the box body (2) is longer than its side opposing this.

12. Installation box according to claim 6 or any one of claims 7 to 11, insofar as these relate to claim 6, **characterised in that** assigned to the installation box (1), in order to enlarge the second installation cavity of its installation support (8), is at least one additional installation support extension (22), which at its one end has a coupling piece (23) for connecting it to the ring body (9) moulded to the shaped strip (17).

13. Installation box according to claim 12, **characterised in that** the coupling piece (23) of the installation support extension (22) consists of a hard plastic, and moulded to this is a shaped strip following its longitudinal extension.

14. Installation box according to claim 13, **characterised in that** a ring body (24) is moulded to the shaped strip at its end facing away from the coupling piece (23), and is made of the same material.

15. Installation box according to claim 14, **characterised in that,** in order to close the installation support extension (22), a closure cap (10) with a ring-shaped side wall is provided, of which the ring-shaped side wall can be detachably secured to the ring body (24) moulded to the shaped strip.

16. Installation box according to claim 15, **characterised in that,** in order to secure the closure cap (10) to the ring body (24) of the installation support extension (22), the side wall of the closure cap (10) is arranged overlapping the ring body (24), and in order to secure the closure cap (10) to the ring body (9), one of the two elements comprises at least one latching projection and the other element comprises at least one latching projection receiver, into which the latching projection engages when the closure cap is connected to the installation support segment.

17. Installation box according to any one of claims 1 to 16, **characterised in that** the base (18) opposite the installation opening (4) of the box body (2) is inclined on its side opposite the installation support (8), wherein at least 50 % of the base surface of the box body (2) is comprised by the inclination section.

## Revendications

1. Boîte d'installation pour une installation de paroi creuse destinée à recevoir des composants électriques/électroniques, comprenant un corps de boîte (2) mettant à disposition un premier espace creux d'installation accessible par une ouverture de montage (4), fabriqué au moins partiellement en matière plastique dure, et une tubulure d'installation (8), partant latéralement du corps de boîte (2), mettant à disposition un second espace creux d'installation, laquelle tubulure d'installation (8) présentant au moins une baguette moulée (17), moulée sur la matière plastique dure du corps de boîte (2), s'étendant sur son étendue longitudinale, rigide à la poussée et élastique flexible dans le sens du plan de l'ouverture de montage (4), en tant que partie de la paroi périphérique de la tubulure d'installation (8) et en ce que la paroi périphérique de la tubulure d'installation (8) est fabriquée en matériau plastique souple flexible dans le sens périphérique de son espace creux d'installation, à l'exception de l'au moins une baguette moulée (17) en matière plastique dure.

2. Boîte d'installation selon la revendication 1, **caractérisée en ce que** la tubulure d'installation (8) présente une seule baguette moulée (17).

3. Boîte d'installation selon la revendication 2, **caractérisée en ce que** la baguette moulée (17) se trouve dans ou contre une paroi latérale (16) de la tubulure d'installation (8), opposée à l'ouverture de montage (4) du corps de boîte (2).

4. Boîte d'installation selon l'une des revendications 1 à 3, **caractérisée en ce que** l'au moins une baguette moulée (17) est réalisée avec une forme rectiligne.

5. Boîte d'installation selon la revendication 3 ou 4, **caractérisée en ce que** la baguette moulée (17) présente une largeur qui correspond à environ 15 à 35 % de la largeur de la paroi latérale (16).

6. Boîte d'installation selon l'une des revendications 1 à 5, **caractérisée en ce qu'**un corps annulaire (9) est moulé dans le même matériau sur l'extrémité de la baguette moulée (17) opposée au corps de la boîte (2).

7. Boîte d'installation selon la revendication 6, **caractérisée en ce que** le corps annulaire comporte un fond fermant son ouverture annulaire, destiné à fermer le second espace creux d'installation.

8. Boîte d'installation selon la revendication 6, **caractérisée en ce que,** pour fermer le second espace creux d'installation, un capuchon obturateur (10) avec une paroi latérale de forme annulaire est affectée à la boîte d'installation (1), laquelle paroi latérale de forme annulaire peut être fixée de manière amovible sur le corps annulaire (9) moulé sur la baguette moulée (17).

9. Boîte d'installation selon la revendication 8, **caractérisée en ce que,** pour fixer le capuchon obturateur (10) sur le corps annulaire (9), la paroi latérale du capuchon obturateur (10) est disposée en superposition sur le corps annulaire (9).

10. Boîte d'installation selon la revendication 8, **caractérisée en ce que,** pour fixer le capuchon obturateur (10) sur le corps annulaire (9) de la tubulure d'installation (8), l'un de ces deux éléments présente au moins une saillie (12) d'enclenchement et l'autre élément au moins une encoche (13) pour saillie d'enclenchement dans laquelle s'engage la saillie d'enclenchement (12) lorsque le capuchon obturateur (10) est raccordé sur le corps annulaire (9).

11. Boîte d'installation selon l'une des revendications 1 à 10, **caractérisée en ce que** la terminaison de la tubulure d'installation (10) opposée au corps de boîte (2) est inclinée par rapport à l'axe longitudinal du corps de boîte (2), de sorte que le côté de la tubulure d'installation (8) orienté vers l'ouverture de montage du corps de boîte (2) est plus long que le côté opposé à celui-ci.

12. Boîte d'installation selon la revendication 6 ou l'une des revendications 7 à 11, dans la mesure où celles-ci se réfèrent à la revendication 6, **caractérisée en ce qu'**au moins un prolongateur (22) supplémentaire de tubulure d'installation est affecté à la boîte d'installation (1) afin d'agrandir le second espace creux d'installation de sa tubulure d'installation (8), lequel présente à l'une de ses extrémités un coupleur (23) destiné à le raccorder au corps annulaire (9) moulé sur la baguette moulée (17).

13. Boîte d'installation selon la revendication 12, **caractérisée en ce que** le coupleur (23) du prolongateur (22) de tubulure d'installation est constitué d'une matière plastique dure et qu'une baguette moulée suivant son étendue longitudinale est moulée sur celui-ci.

14. Boîte d'installation selon la revendication 13, **caractérisée en ce qu'**un corps annulaire (24) est moulé dans le même matériau sur la baguette moulée, à son extrémité opposée au coupleur (23).

15. Boîte d'installation selon la revendication 14, **caractérisée en ce que** le capuchon obturateur (10) pour fermer le prolongateur (22) de tubulure d'installation est prévu avec une paroi latérale de forme annulaire, laquelle paroi latérale de forme annulaire peut être fixée de manière amovible sur le corps annulaire (24) moulé sur la baguette moulée.

16. Boîte d'installation selon la revendication 15, **caractérisée en ce que,** pour fixer le capuchon obturateur (10) sur le corps annulaire (24) du prolongateur (22) de tubulure d'installation, la paroi latérale du capuchon obturateur (10) est disposée en superposition sur le corps annulaire (24) et que pour fixer le capuchon obturateur (10) sur le corps annulaire (9) l'un des deux éléments présente au moins une saillie d'enclenchement et l'autre élément au moins une encoche pour saillie d'enclenchement, dans laquelle s'engage la saillie d'enclenchement lorsque le capuchon obturateur est raccordé sur le segment de tubulure d'installation.

17. Boîte d'installation selon l'une des revendications 1 à 16, **caractérisée en ce que** le fond (18) situé à l'opposé de l'ouverture de montage (4) du corps de boîte (2) est incliné sur son côté opposé à la tubulure d'installation (8), laquelle inclinaison comprenant au moins 50% de la surface de fond du corps de boîte (2).
